(19) Europäisches Patentamt / European Patent Office / Office européen des brevets

(11) **EP 3 959 481 B1**

(12) **EUROPÄISCHE PATENTSCHRIFT**

(45) Veröffentlichungstag und Bekanntmachung des Hinweises auf die Patenterteilung:
**12.06.2024 Patentblatt 2024/24**

(21) Anmeldenummer: **20721551.8**

(22) Anmeldetag: **24.04.2020**

(51) Internationale Patentklassifikation (IPC):
**G01B 21/08** (2006.01)   **G01K 13/02** (2021.01)
**G01K 3/14** (2006.01)   **G01K 7/04** (2006.01)
**G01N 25/18** (2006.01)

(52) Gemeinsame Patentklassifikation (CPC):
**G01K 13/02; G01B 21/085; G01K 3/14; G01K 7/04; G01N 25/18**

(86) Internationale Anmeldenummer:
**PCT/EP2020/061418**

(87) Internationale Veröffentlichungsnummer:
**WO 2020/216882 (29.10.2020 Gazette 2020/44)**

(54) **GRENZSCHICHTSENSOR, DESSEN HERSTELLUNG UND VERWENDUNG**

INTERFACIAL SENSOR, PRODUCTION AND USE THEREOF

CAPTEUR DE COUCHE LIMITE, SA FABRICATION ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2019 DE 102019206013**

(43) Veröffentlichungstag der Anmeldung:
**02.03.2022 Patentblatt 2022/09**

(73) Patentinhaber: **Fraunhofer-Gesellschaft zur Förderung
der angewandten Forschung e.V.
80686 München (DE)**

(72) Erfinder:
• **MAYER, Erhard
83626 Valley (DE)**
• **VISSER, Michael
83626 Valley (DE)**

(74) Vertreter: **Friese Goeden Patentanwälte PartGmbB
Widenmayerstraße 49
80538 München (DE)**

(56) Entgegenhaltungen:
**CN-A- 106 679 932**

• **ERHARD MAYER ET AL: "Messung des konvektiven Wärmeübergangs - Entwicklung eines neuen Sensors und bauphysikalische Anwendungen", BAUPHYSIK., Bd. 40, Nr. 5, 1. Oktober 2018 (2018-10-01), Seiten 336-343, XP055708598, DE ISSN: 0171-5445, DOI: 10.1002/bapi.201800015**
• **DAVIES M ET AL: "The development of an accurate tool to determine convective heat transfer coefficients in real buildings", ENERGY AND BUILDINGS, LAUSANNE, CH, Bd. 37, Nr. 2, 1. Februar 2005 (2005-02-01), Seiten 141-145, XP004610215, ISSN: 0378-7788, DOI: 10.1016/J.ENBUILD.2004.06.001**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft einen Grenzschichtsensor zur Bestimmung der Dicke einer Grenzschicht über einer Oberfläche eines umströmten Körpers mit einer ersten Einrichtung zur Bestimmung einer Temperatur, einer zweiten Einrichtung zur Bestimmung einer Temperatur und einer dritten Einrichtung zur Bestimmung einer Temperatur, welche jeweils in einem vorgebbaren Abstand zur Oberfläche des umströmten Körpers angeordnet sind.

Aus der DE 10 2016 107 212 A1 ist eine Vorrichtung zur Bestimmung des konvektiven Wärmeübergangskoeffizienten an einer Konvektionsfläche bekannt. Diese bekannte Vorrichtung misst die Temperaturdifferenz zwischen der Oberflächentemperatur der Konvektionsfläche und der Umgebungsfluidtemperatur sowie eine weitere Temperaturdifferenz zwischen einer Temperatur im Nahbereich der Konvektionsfläche und der Umgebungsfluidtemperatur. Diesem bekannten Sensor liegt die Erkenntnis zugrunde, dass der Temperaturverlauf innerhalb der Grenzschicht einen exponentiellen Verlauf aufweist, mit dem konvektiven Wärmeübergangskoeffizienten als Konstante. Durch Bestimmung von drei Stützstellen kann somit der exponentielle Verlauf und daraus der Wärmeübergangskoeffizient bestimmt werden.

Dieser bekannte Sensor ist in Form eines Stabes bzw. Stiftes ausgeführt, welcher sich von der Konvektionsfläche in etwa senkrecht erhebt. In diesen Stift sind Öffnungen eingebracht, in welchen Thermoelemente zur Temperaturmessung angeordnet sind. Die bekannte Vorrichtung weist somit den Nachteil einer aufwändigen Herstellung auf. Darüber hinaus ist die bekannte Vorrichtung im Betrieb anfällig für Beschädigungen und Betriebsstörungen durch Witterungseinflüsse. E. Mayer et al., Bauphysik 40(2018), p. 336-343, ISSN 0171-5445, doi:10.1002/bapi.201800015 offenbart einen Grenzschichtsensor, der drei Temperatursensoren enthält.

Ausgehend vom Stand der Technik besteht somit ein Bedürfnis, einen leicht herstellbaren, betriebssicheren und mechanisch robusten Grenzschichtsensor bereitzustellen.

Die Aufgabe wird erfindungsgemäß durch einen Grenzschichtsensor gemäß Anspruch 1 und ein Verfahren nach Anspruch 10 gelöst. Vorteilhafte Weiterbildungen der Erfindung finden sich in den Unteransprüchen.

Erfindungsgemäß wird ein Grenzschichtsensor zur Bestimmung der Dicke einer Grenzschicht über der Oberfläche eines umströmten Körpers vorgeschlagen. Der umströmte Körper kann in einigen Ausführungsformen der Erfindung eine Konvektionsfläche sein, beispielsweise ein Heizkörper oder ein Kühlkörper, so dass der erfindungsgemäße Grenzschichtsensor den konvektiven Wärmeübergangskoeffizienten und damit die zur Verfügung stehende Heiz- oder Kühlleistung bestimmen kann. In anderen Ausführungsformen der Erfindung kann der umströmte Körper ein Fahrzeug oder der Flügel einer Windenergieanlage oder ein Bauteil eines Flugzeuges sein, insbesondere eine Tragfläche. In wiederum einer anderen Ausführungsform kann der umströmte Körper der Rumpf eines Bootes bzw. Schiffes sein, so dass die Grenzschichtdicke der Wasserströmung am Rumpf bestimmt werden kann. Der Sensor eignet sich zur Erfassung der Grenzschicht an jedwedem umströmten Körper, so dass die genannten Beispiele nicht als beschränkend anzusehen sind.

Der Erfindung liegt die Erkenntnis zu Grunde, dass die Geschwindigkeit $u_y$ mit zunehmenden Abstand y in Normalenrichtung von der Oberfläche des umströmten Körpers den folgenden Verlauf aufweist:

$$u_y = u_a - u_a \cdot e^{-\frac{y}{d}}$$

. Dabei bezeichnet $u_a$ die Geschwindigkeit außerhalb der Grenzschicht und d die Dicke der Grenzschicht. Für den konvektiven Wärmeüber-

$$h_c = \frac{l}{d},$$

gangskoeffizient $h_c$ gilt , wobei 1 die Wärmeleitfähigkeit des strömenden Mediums und d die Dicke der Grenzschicht bezeichnen. Der Wärmeübergangskoeffizient $h_c$ und die aufgrund der Strömung auf den Körper einwirkende Scherkraft stehen in linearem Zusammenhang. Erfindungsgemäß wurde erkannt, dass somit durch Messung des Temperaturverlaufs der Grenzschicht nicht nur die Temperaturgrenzschicht, sondern auch die Strömungsgrenzschicht messbar ist, so dass mit dem erfindungsgemäßen Grenzschichtsensor aus dem gemessenen Temperaturverlauf auch die einwirkende Scherkraft messbar ist. Daraus kann der Anstellwinkel eines Rotors oder die Fluglage eines Flugzeuges erfasst und/oder geregelt werden kann. In anderen Ausführungsformen der Erfindung kann über die Messung der Grenzschichtdicke an unterschiedlichen Stellen eines umströmten Körpers der Wärmeübergangskoeffizient $h_c$ und damit die auftretende Scherkraft in Abhängigkeit der Form bzw. an unterschiedlichen Stellen des Körpers bestimmt werden, um so die Form des Körpers bzw. eines Modells des endgültigen Körpers zu optimieren oder an gewünschte Eigenschaften anzupassen. bestimmt werden Dementsprechend kann die Oberfläche eines umströmten Körpers eben oder gekrümmt sein.

Erfindungsgemäß weist der Grenzschichtsensor eine erste Einrichtung zur Bestimmung einer Temperatur, eine zweite Einrichtung zur Bestimmung einer Temperatur und eine dritte Einrichtung zur Bestimmung einer Temperatur auf. In einigen Ausführungsformen der Erfindung kann auch eine noch größere Anzahl von Einrichtungen zur Bestimmung einer Temperatur vorhanden sein, um auf diese Weise die Genauigkeit des Grenzschichtsensors zu erhöhen. Beispielsweise kann die Anzahl zwischen etwa 4 und etwa 10 betragen. Die Einrichtungen zur Bestimmung einer Temperatur können beispielsweise ausgewählt sein aus einem Widerstandsthermometer oder einem Thermoelement. Die Einrichtungen zur Bestimmung einer Temperatur können dazu eingerichtet sein, Absolutwerte der Temperatur am jeweiligen Messort zu erfassen. In anderen Ausführungsformen der Erfindung können die Einrichtungen zur Bestimmung einer Temperatur so verschaltet sein, dass diese lediglich Differenztemperaturen zwischen den jeweiligen Messorten erfassen.

Die zumindest drei Einrichtungen zur Bestimmung einer Temperatur sind jeweils in einem vorgebbaren Abstand zur Oberfläche des umströmten Körpers angeordnet. Der Abstand wird für die Zwecke der vorliegenden Beschreibung entlang des Normalenvektors der durch die Oberfläche des umströmten Körper aufgespannten Ebene bestimmt, bzw. entlang des Normalenvektors derjenigen Ebene, welche durch zwei Tangenten an den Messort einer gekrümmten Oberfläche definiert wird.

Der vorgebbare Abstand x1 zwischen der ersten Einrichtung zur Bestimmung einer Temperatur und der Oberfläche eines umströmten Körpers kann in einigen Ausführungsformen 0 betragen, d.h. die erste Einrichtung zur Bestimmung einer Temperatur liegt unmittelbar an der Oberfläche des umströmten Körpers an und misst dessen Temperatur. Der Abstand x3 der dritten Einrichtung zur Bestimmung einer Temperatur kann so gewählt sein, dass die Temperatur der Umgebung außerhalb der Grenzschicht gemessen wird, beispielsweise kann der Abstand mehr als 2 mm, mehr als 7 mm, mehr als 10 mm, mehr als 15 mm oder mehr als 20 mm betragen. In einigen Ausführungsformen der Erfindung kann der Abstand geringer als 30 mm, geringer als 20 mm oder geringer als 15 mm oder geringer als 5 mm sein. Dies erlaubt eine hinreichende Genauigkeit bei gleichzeitig kompakten Abmessungen des Grenzschichtsensors.

Der vorgebbare Abstand x2 der zweiten Einrichtung zur Bestimmung der Temperatur ist gemäß der beanspruchten Erfindung so gewählt, dass dieser zwischen dem ersten Abstand x1 und dem dritten Abstand x3 der ersten und dritten Einrichtungen zur Bestimmung der Temperatur liegt. Beispielsweise kann der Abstand x1 zwischen etwa 1 mm und etwa 4 mm und etwa 1,5 mm und etwa 3 mm betragen.

Aus den so bestimmten Temperaturdifferenzen zwischen der ersten und der dritten Einrichtung zur Bestimmung der Temperatur und der zweiten und dritten Einrichtung zur Bestimmung der Temperatur kann in an sich bekannter Weise unter Berücksichtigung des Wärmeleitkoeffizienten des strömenden Mediums der konvektive Wärmeübergangskoeffizient bestimmt werden. Erfindungsgemäß wurde erkannt, dass bei bekanntem, bzw. gemessenen konvektivem Wärmeübergangskoeffizienten jedoch auch die Grenzschichtdicke bestimmt werden kann. Hierzu kann in einigen Ausführungsformen der Erfindung die Oberfläche des umströmten Körpers im Bereich des erfindungsgemäßen Grenzschichtsensors mit einer Heizeinrichtung versehen sein, welcher einen vorgebbaren Wärmestrom in die Umgebung abführt, so dass die Grenzschichtdicke aus der sich entlang des Grenzschichtsensors einstellenden Temperaturverteilung unmittelbar bestimmt werden kann.

Eine Heizeinrichtung kann als Dünnschichtwiderstand auf der Leiterplatte erzeugt werden oder als Dehnungsmessstreifen oder als diskretes Bauteil ausgeführt sein.

Erfindungsgemäß wird nun vorgeschlagen, dass zumindest die zweite und die dritte Einrichtung zur Bestimmung einer Temperatur auf einer gedruckten Leiterplatte aufgebracht sind. In einigen Ausführungsformen der Erfindung kann auch die erste Einrichtung zur Bestimmung einer Temperatur auf dieser oder einer weiteren gedruckten Leiterplatte angeordnet sein. In einigen Ausführungsformen der Erfindung können sämtliche Einrichtungen zur Bestimmung einer Temperatur auf einer gedruckten Leiterplatte angeordnet werden. Die erfindungsgemäß vorgeschlagene gedruckte Leiterplatte wird auf einen Messkörper aufgebracht.

Die gedruckte Leiterplatte kann in an sich bekannter Weise aus Polyimid oder glasfaserverstärktem Kunststoff bestehen. In einigen Ausführungsformen der Erfindung können auf der gedruckten Leiterplatte Leiterbahnen in Form einer strukturierten Kupferschicht ausgebildet sein, welche Messwiderstände zur Erfassung der Temperatur kontaktieren. Die Widerstandsmessung kann in an sich bekannter Weise über eine Wheatstone Brücke oder eine Vierkontaktmessung erfolgen.

In anderen Ausführungsformen der Erfindung kann zumindest eine Einrichtung zur Bestimmung einer Temperatur ein Thermoelement enthalten oder daraus bestehen. In diesem Fall kann die gedruckte Leiterplatte strukturierte Schichten aus zumindest zwei verschiedenen Metallen und/oder Legierungen enthalten bzw. daraus bestehen, welche an ihren Kontaktpunkten leitfähig miteinander verbunden sind, entweder durch Löten, Punktschweißen oder unmittelbare Dünnschichtabscheidung. Die Einrichtungen zur Bestimmung der Temperaturen können somit besonders kompakt hergestellt sein, so dass sich ein mechanisch robuster Aufbau ergibt. Das Aufbringen der unterschiedlichen Metalle bzw. Legierungen auf der gedruckten Leiterplatte kann in diesem Fall beispielsweise durch thermisches Aufdampfen, Plasmabeschichten, Sputtern, galvanische Abscheidung, außenstromlose Abscheidung oder weitere CVD- oder PVD-Verfahren erfolgen. Die gedruckte Leiterplatte kann entweder vor der Beschichtung maskiert werden, so dass Teilflächen beschichtet werden und andere Teilflächen unbeschichtet bleiben. In anderen Ausführungsformen der Erfindung kann die Leiterplatte auch vollflächig beschichtet werden, wobei nachfolgend durch Strukturieren und Ätzen einzelne Teilflächen wieder freigelegt werden.

Der erfindungsgemäß Messkörper kann beispielsweise ein Polymer enthalten oder daraus bestehen. Die gedruckte Leiterplatte kann mit dem Messkörper durch Klebung oder Schweißung verbunden sein. Sofern der Messkörper in einem Spitzgussverfahren hergestellt wird, kann die gedruckte Leiterplatte auch bei der Herstellung eines Messkörpers eingebettet werden. In jedem Fall ergibt sich durch den kompakten Messkörper ein mechanisch robuster Aufbau, welcher einen zuverlässigen Betrieb des erfindungsgemäßen Grenzschichtsensors sicherstellt. Durch die Verwendung einer gedruckten Leiterplatte zur Herstellung/Kontaktierung der notwendigen Einrichtungen zur Bestimmung der Temperaturen bzw. der Temperaturverläufe wird einerseits ein mechanisch robuster Aufbau und andererseits eine einfache Herstellung auch im Massenmarkt ermöglicht.

In einigen Ausführungsformen der Erfindung kann das Thermoelement ausgewählt sein aus Cu-CuNiMn (Konstantan). In einigen Ausführungsformen der Erfindung kann das Thermoelement ausgewählt sein aus Cu-CuNi. In einigen Ausführungsformen der Erfindung kann das Thermoelement ausgewählt sein aus NiCr-CuNi. In einigen Ausführungsformen der Erfindung kann das Thermoelement ausgewählt sein aus Fe-CuNi. In einigen Ausführungsformen der Erfindung kann das Thermoelement ausgewählt sein aus Ni-CrNi. Die genannten Metalle bzw. Legierungen lassen sich in einfacher Weise auf einem die gedruckte Leiterplatte bildenden Trägersubstrat abscheiden oder in Form einer Folie oder eines Drahtes durch Klebung befestigen. Andererseits ist die von den genannten Materialzusammensetzungen erzeugte Thermospannung bekannt, so dass Absolutmessungen in einfacher Weise möglich sind. In einigen Ausführungsformen der Erfindung können alle Einrichtungen zur Bestimmung der Temperaturen identisch zusammengesetzt sein. Hierdurch kann die Herstellung vereinfacht sein, weil beispielsweise nur zwei Metalle bzw. Legierungen sequenziell auf dem die Leiterplatte bildenden Substrat abgeschieden werden müssen. In anderen Ausführungsformen der Erfindung können unterschiedliche Einrichtungen zur Bestimmung der Temperatur unterschiedlich zusammengesetzt sein, um auf diese Weise durch redundante Messung die Messgenauigkeit zu erhöhenoder die Ergebnisse zu plausibilisieren.

In einigen Ausführungsformen der Erfindung kann die gedruckte Leiterplatte Polyimid enthalten oder daraus bestehen. In einigen Ausführungsformen der Erfindung kann die gedruckte Leiterplatte eine Dicke von 0,1 mm bis etwa 0,5 mm oder von etwa 0,125 mm bis etwa 0,25 mm aufweisen. Eine solche Leiterplatte kann flexibel sein, so dass diese sich der Form des Messkörpers besser anpassen kann und bei der Wahl des für einen vorgebbaren Anwendungszweck verwendeten Messkörpers eine größere Freiheit besteht.

In einigen Ausführungsformen der Erfindung kann der Messkörper zumindest eine erste Seite aufweisen, welche mit der Oberfläche des umströmten Körpers verbindbar ist und zumindest eine zweite Seite aufweisen, welche sich ausgehend von der Oberfläche stetig erhebt. In einigen Ausführungsformen der Erfindung kann die erste Seite des Messkörpers eine Form aufweisen, welche komplementär zur Oberfläche des umströmten Körpers geformt ist. Im Falle eines ebenen umströmten Körpers kann somit die erste Seite des Messkörpers ebenfalls eben sein. Falls der umströmte Körper konvex geformt ist, beispielsweise eine Tragfläche, ein Schiffsrumpf oder der Flügel einer Windenergieanlage, so ist die erste Seite des Messkörpers hierzu komplementär konkav geformt. Hierdurch wird zum einen ein guter thermischer Kontakt des Messkörpers ermöglicht, so dass eine auf der erste Seite des Messkörpers angeordnete Einrichtung zur Erfassung einer Temperatur die Oberflächentemperatur des Messkörpers zuverlässig bestimmen kann. Andererseits kann die mechanische Befestigung des Messkörpers durch Erhöhung der Kontaktfläche verbessert sein.

Die zweite Seite des Messkörpers erhebt sich ausgehend von der Oberfläche des umströmten Körpers stetig. Hierunter wird für die Zwecke der vorliegenden Beschreibung eine Form der zweiten Seite verstanden, welche ohne Stufen, Knicke oder Sprünge verläuft. Hierdurch wird sichergestellt, dass die Strömung weitgehend ungestört über den Messkörper hinwegströmt, ohne dass sich unerwünschte Turbulenzen bilden. Die zweite Seite kann somit beispielsweise eben sein, so dass der Messkörpers die Grundform eines Keils aufweisen kann. In anderen Ausführungsformen der Erfindung kann die zweite Seite konkav oder konvex geformt sein, so dass sich beispielsweise der Eindruck eines Kegels, eines Kegelstumpfes, einer Kugelkalotte oder auch einer konkaven oder konvexen Freiformfläche ergibt.

In einigen Ausführungsformen der Erfindung kann die gedruckte Leiterplatte die erste und die zweite Seite des Messkörpers zumindest teilweise bedecken. Dies ermöglicht eine besonders einfache Herstellung des erfindungsgemäßen Sensors, da die Leiterplatte durch Aufkleben oder Verschweißen mit dem Messkörper aufgebracht werden kann und eine einstückige Leiterplatte ausreichend ist, um sämtliche Einrichtungen zur Bestimmung einer Temperatur sowohl auf der ersten als auch auf der zweiten Seite des Messkörpers mechanisch zu befestigen und elektrisch zu kontaktieren.

Nachfolgend soll die Erfindung anhand von Figuren ohne Beschränkung des allgemeinen Erfindungsgedankens näher erläutert werden. Dabei zeigt

Fig. 1 einen Grenzschichtsensor gemäß einer Ausführungsform der Erfindung.

Fig. 2 zeigt einen Messkörper gemäß einer ersten Ausführungsform der Erfindung.

Fig. 3 zeigt eine gedruckte Leiterplatte gemäß einer ersten Ausführungsform der Erfindung.

Fig. 4 zeigt einen Grenzschichtsensor gemäß einer zweiten Ausführungsform der Erfindung.

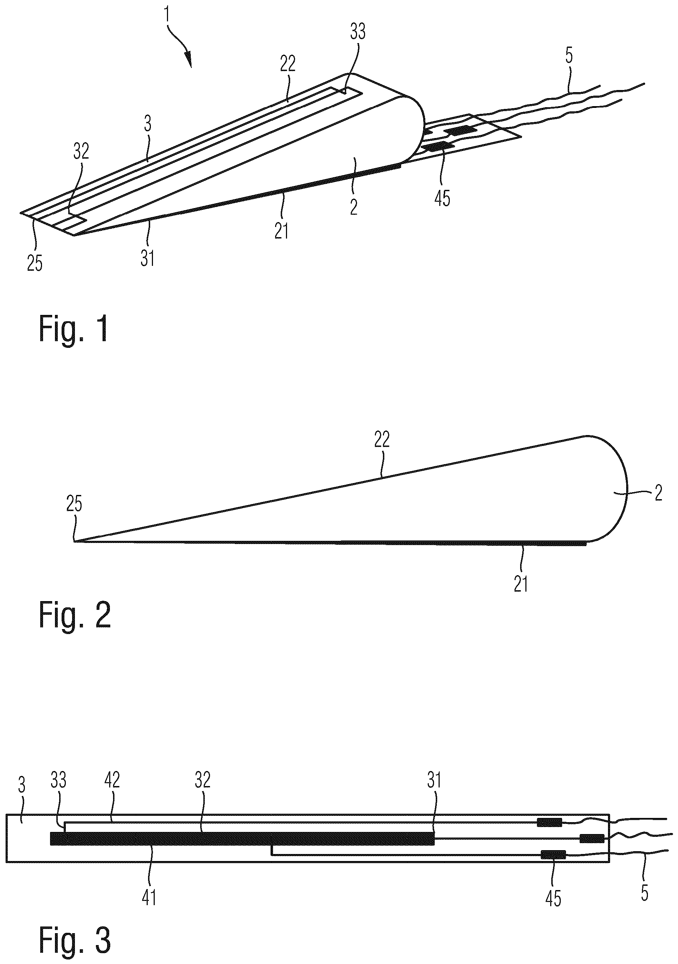

Anhand der Figuren 1, 2 und 3 wird eine erste Ausführungsform des erfindungsgemäßen Grenzschichtsensors erläutert. Dabei zeigt Fig. 1 eine perspektivische Darstellung des vollständigen Sensors. Fig. 2 zeigt den Messkörper im Schnitt und Fig. 3 zeigt die gedruckte Leiterplatte mit den Einrichtungen zur Bestimmung einer Temperatur in der Aufsicht.

Der in der ersten Ausführungsform verwendete Messkörper 2 weist in etwa eine keilförmige Grundform auf mit einer ebenen ersten Seite 21, welche dazu eingerichtet ist, bei Betrieb des Grenzschichtsensors mit der Oberfläche eines umströmten Körpers verbunden zu werden. Die erste Seite des Messkörpers 2 kann beispielsweise durch Klebung oder Verschweißen mit der Oberfläche des umströmten Körpers verbunden werden.

Der Messkörper 2 weist weiterhin eine zweite Seite 22 auf, welche im dargestellten Ausführungsbeispiel ebenfalls eben ist und sich ausgehend von der Oberfläche des umströmten Körpers stetig erhebt, d.h. ohne Stufen, Knicke oder Sprünge. Der Messkörper 2 ist dazu eingerichtet, mit seiner Spitze nach Luv zu zeigen, so dass die Strömung entlang der zweiten Seite 22 aufgleitet. Die der Strömung abgewandte Leeseite des Messkörpers 2 kann, wie in Fig. 2 dargestellt, gekrümmt ausgeführt sein. In anderen Ausführungsformen der Erfindung kann die der Strömung abgewandte Seite auch eine andere Form aufweisen.

Der Messkörper 2 kann in einigen Ausführungsformen der Erfindung aus einem Polymer hergestellt sein. Beispielsweise kann Polyamid, Polyethylen, Polytetrafluorethylen oder ein anderer Kunststoff Verwendung finden. Diese Materialien sind mechanisch robust, leicht zu verarbeiten und elektrisch isolierend, so dass eine Beeinträchtigung der Einrichtungen zur Bestimmung der Temperaturen nicht zu erwarten ist. Durch geringe Wärmeleitfähigkeit des Messkörpers kann die Messgenauigkeit erhöht sein. In einigen Ausführungsformen der Erfindung kann der Messkörper 2 in einem generativen Herstellungsverfahren hergestellt sein. Dies ermöglicht eine freie Formgebung zur Anpassung an unterschiedliche Anwendungszwecke.

Die auf den Grenzschichtsensor 1 bzw. den Messkörper 2 einwirkende Strömung kann in einigen Ausführungsformen eine erzwungene Strömung sein, beispielsweise eine atmosphärische Luftströmung oder der bei Bewegung eines Fahr- oder Flugzeuges oder eines Schiffes entstehende Fahrtwind. In anderen Ausführungsformen der Erfindung kann die Strömung eine thermische Strömung sein, welche sich an erwärmten bzw. gekühlten Oberfläche ausbildet, deren Temperatur von der Temperatur der Umgebung abweicht.

Wie aus Fig. 1 weiter ersichtlich ist, ist der Messkörper 2 mit einer gedruckten Leiterplatte versehen, welche sich von der zweiten Seiten 22 über die Spitze 25 zur ersten Seite 21 erstreckt. Die gedruckte Leiterplatte 3 kann durch Kleben oder Schweißen mit dem Messkörper 2 verbunden sein. In anderen Ausführungsformen der Erfindung können zwei Leiterplatten verwendet werden, welche der zweiten Seite 22 und der ersten Seite 21 des Messkörpers 2 zugeordnet sind. die Erfindung offenbart nicht die Verwendung von genau einer Leiterplatte als Lösungsprinzip.

Wie aus Fig. 3 ersichtlich ist, weist die gedruckte Leiterplatte 3 ein im wesentlichen ebenes Substrat auf. Das Substrat der Leiterplatte kann in einigen Ausführungsformen flexibel sein und beispielsweise eine Folie aus Polyimid enthalten. Die gedruckte Leiterplatte 3 kann mit einer strukturierten Metallisierung versehen sein, welche in an sich bekannter Weise Leiterbahnen ausbildet, mit welchen Einrichtungen zur Bestimmung einer Temperatur 31, 32 und 33 kontaktiert werden. In diesem Fall kann es sich bei den Einrichtungen zur Bestimmungen einer Temperatur beispielsweise um Widerstandsthermometer handeln.

Im dargestellten Ausführungsbeispiel enthalten die Einrichtungen zur Bestimmung einer Temperatur 31, 32 und 33 jeweils ein Thermoelement. An den jeweiligen Messstellen treffen somit unterschiedliche Metalle bzw. Legierungen aufeinander, so dass sich bei Ausbildung einer Temperaturdifferenz eine Thermospannung ausbildet. Die Thermospannung wird über Anschlusskontakte 45 auf der gedruckten Leiterplatte und Anschlussdrähte 5 zu einer nicht dargestellten Einrichtung zur Spannungsmessung geleitet, welche die kleinen Thermospannungen in einen Temperaturwert bzw. einen die Temperaturdifferenzen charakterisierenden Messwert umsetzt und der weiteren analogen oder digitalen Auswertung zugänglich macht.

Zur Ausbildung der Thermoelemente sind auf der gedruckten Leiterplatte zwei strukturierte Metallisierungen 41 und 42 aufgebracht, beispielsweise durch Aufkleben einer Folie oder durch an sich bekannte Verfahren zur Abscheidung dünner Schichten, wie beispielsweise Sputtern, Aufdampfen, Plasmabeschichten, außenstromloses oder galvanisches Abscheiden oder weitere, hier nicht genannte CVD- oder PVD-Verfahren.

In einigen Ausführungsformen der Erfindung kann das Material der ersten Metallisierung 41 ausgewählt sein aus Kupfer oder einer Legierung, welche Kupfer und Nickel oder Nickel und Chrom enthält. In diesen Fällen ist das Material der zweiten Metallisierung 42 ausgewählt aus Nickel oder Eisen oder wiederum einer Legierung, welche Kupfer und Nickel oder Nickel und Chrom enthält. Wesentlich ist, dass das Material der ersten Metallisierung 41 vom Material der zweiten Metallisierung 42 verschieden gewählt ist.

Bei Montage der gedruckten Leiterplatte 3 auf dem Messkörper 2 kommen die Anschlusskontakte 45 außerhalb des Messkörpers zu liegen, wie in Fig. 1 ersichtlich ist. In anderen Ausführungsformen der Erfindung kann der Messkörper 2 auch eine Einrichtung zur Zugentlastung oder einen Steckverbinder tragen.

Die erste Einrichtung zur Bestimmung einer Temperatur 31 kommt auf der ersten Seite 21 des Messkörpers 2 zu liegen und ist somit in Kontakt mit der Oberfläche des umströmten Körpers und kann dessen Temperatur erfassen. Der ausgehend von den Anschlusskontakten 45 distale Teil der gedruckten Leiterplatte 3 kommt auf der zweiten Seite 22 des Messkörpers 2 zu liegen und misst somit unter Verwendung der zweiten Einrichtung zur Bestimmung einer Temperatur 32 und der dritten Einrichtung zur Bestimmung einer Temperatur 33 die Temperatur innerhalb bzw. außerhalb der Grenzschicht. Gemäß der beanspruchten Erfindung wird sodann aus den drei Temperaturen bzw. den Temperaturdifferenzen in an sich bekannter Weise die Grenzschichtdicke und/oder der konvektive Wärmeübergangskoeffizient bestimmt.

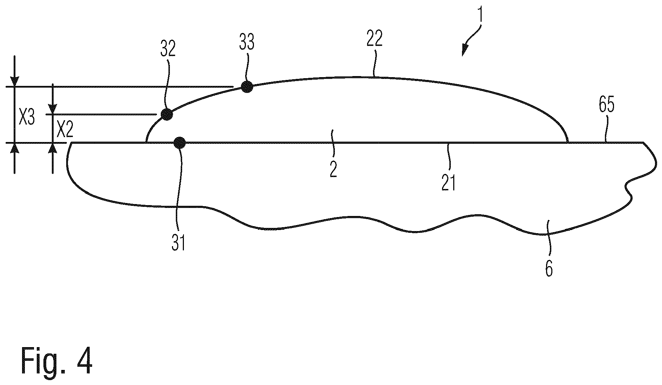

Anhand der Fig. 4 wird eine zweite Ausführungsform des erfindungsgemäßen Grenzschichtsensors erläutert. Gleiche Bestandteile der Erfindung sind mit gleichen Bezugszeichen versehen, so dass sich die nachfolgende Beschreibung auf die wesentlichen Unterschiede beschränkt.

Dargestellt ist ein umströmter Körper 6 mit einer Oberfläche 65. Der Körper 6 kann beispielsweise ein Heizkörper oder ein Kühlkörper sein, wenn ein Wärmeübergangskoeffizient oder die Grenzschichtdicke einer thermischen Strömung bestimmt werden soll. In anderen Ausführungsformen der Erfindung kann der umströmte Körper 6 auch der Flügel einer Windenergieanlage, die Tragfläche eines Flugzeuges oder ein Teil eines Bootsrumpfes sein, so dass die bei Betrieb dieser Anlagen entstehende Luft- bzw. Wasserströmung erfasst werden kann.

Wie aus Fig. 4 weiter ersichtlich ist, weist der Messkörper 2 eine im wesentlichen konvexe Form auf, welche beispielsweise als Kugelkalotte, als Parabel oder als Hyperbel ausgebildet sein kann. In anderen Ausführungsformen der Erfindung kann der Messkörper 2 auch ein Kegel bzw. ein Kegelstumpf sein, wobei die Einrichtungen zur Bestimmung der Temperaturen zumindest teilweise an der Mantelfläche des Kegels befestigt sein können. Die symmetrische Ausführung des Messkörpers 2 als Kugelkalotte kann den Vorteil aufweisen, dass die Strömung unabhängig von ihrer Einfallsrichtung erfasst werden kann. Darüber hinaus kann die ablaufende Strömung mit geringeren Turbulenzen den Messbereich verlassen.

Dargestellt sind wiederum drei Einrichtungen zur Bestimmung einer Temperatur 31, 32 und 33. Dabei ist die erste Einrichtung 31 auf der ersten Seite 21 des Messkörpers 2 angeordnet und somit in Kontakt mit der Oberfläche 65 des umströmten Körpers 6. Die zweite und die dritte Einrichtung zur Bestimmung einer Temperatur 32 und 33 befinden sich wiederum an unterschiedlichen Orten auf der zweiten Seite 22 des Messkörpers 2, so dass diese in einem unterschiedlichen Abstand x2 bzw. x3 zur Oberfläche 65 angeordnet sind. Hierdurch kann die Temperatur der Oberfläche 65, die Temperatur des umgebenden strömenden Mediums sowie ein Zwischenwert in der Grenzschicht erfasst werden. In gleicher Weise können auch weitere Einrichtungen zur Bestimmung der Temperatur auf dem Messkörper 2 angeordnet werden können, um entweder für unterschiedliche Strömungsrichtungen unterschiedliche Einrichtungen zur Bestimmung der Temperatur zu verwenden oder aber die Genauigkeit des Grenzschichtsensors zu verbessern. Beispielsweise kann die Anzahl der Einrichtungen zur Bestimmung einer Temperatur in einigen Ausführungsformen der Erfindung zwischen 3 und etwa 20 oder zwischen etwa 6 und etwa 18 betragen.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Grenzschichtsensor (1) zur Bestimmung der Dicke einer Grenzschicht über einer Oberfläche (65) eines umströmten Körpers (6) mit

   zumindest einer ersten Einrichtung zur Bestimmung einer Temperatur (31), zumindest einer zweiten Einrichtung zur Bestimmung einer Temperatur (32) und zumindest einer dritten Einrichtung zur Bestimmung einer Temperatur (33), welche jeweils dazu eingerichtet sind, während des Betriebs des Grenzschichtsensors (1) in einem vorgebbaren Abstand (X1, X2, X3) zur Oberfläche (65) des umströmten Körpers (6) angeordnet zu sein, wobei der vorgebbare Abstand X2 der zweiten Einrichtung (32) zur Bestimmung der Temperatur so gewählt ist, dass dieser zwischen dem ersten Abstand X1 und dem dritten Abstand X3 der ersten und dritten Einrichtungen (31, 33) zur Bestimmung der Temperatur liegt, wobei der Grenzschichtsensor (1) weiterhin eine Auswerteeinrichtung enthält, welche dazu eingerichtet ist, aus den drei Temperaturen bzw. den Temperaturdifferenzen die Grenzschichtdicke und/oder den konvektiven Wärmeübergangskoeffizienten zu bestimmen, **dadurch gekennzeichnet, dass** zumindest die zweite und die dritte Einrichtung zur Bestimmung einer Temperatur (32, 33) auf einer gedruckten Leiterplatte (3) aufgebracht sind, welche auf einen Messkörper (2) aufgebracht ist.

2. Grenzschichtsensor nach Anspruch 1, **dadurch gekennzeichnet, dass** zumindest eine Einrichtung zur Bestimmung einer Temperatur (31, 32, 33) ein Thermoelement enthält oder daraus besteht.

**3.** Grenzschichtsensor nach Anspruch 1 oder 2, **dadurch gekennzeichnet, dass** das Thermoelement ausgewählt ist aus Cu-CuNiMn und/oder Cu-CuNi und/oder NiCr-CuNi und/oder Fe-CuNi und/oder NiCrNi.

**4.** Grenzschichtsensor nach einem der Ansprüche 1 bis 3, **dadurch gekennzeichnet, dass** die gedruckte Leiterplatte (3) Polyimid enthält oder daraus besteht.

**5.** Grenzschichtsensor nach einem der Ansprüche 1 bis 4, **dadurch gekennzeichnet, dass** der Messkörper (2) zumindest eine erste Seite (21) aufweist, welche mit der Oberfläche (65) des umströmten Körpers (6) verbindbar ist und zumindest eine zweite Seite (22) aufweist, welche sich ausgehend von der Oberfläche (65) stetig erhebt.

**6.** Grenzschichtsensor nach Anspruch 5, **dadurch gekennzeichnet, dass** die gedruckte Leiterplatte (3) die erste und die zweite Seite zumindest teilweise bedeckt.

**7.** Grenzschichtsensor nach einem der Ansprüche 1 bis 6, **dadurch gekennzeichnet, dass** die zweite Seite (22) des Messkörpers (2) eben oder konvex geformt ist.

**8.** Grenzschichtsensor nach einem der Ansprüche 1 bis 7, **dadurch gekennzeichnet, dass** der Messkörper (2) die Form eines Keils oder einer Kugelkalotte aufweist.

**9.** Windenergieanlage oder Fahrzeug oder Flugzeug oder Raumklimamessgerät oder Schiff mit einem Grenzschichtsensor nach einem der Ansprüche 1 bis 8.

**10.** Verfahren zur Herstellung eines Grenzschichtsensors (1), mit folgenden Schritten:

Bereitstellen einer gedruckten Leiterplatte (3) Erzeugen von zumindest einer ersten Einrichtung zur Bestimmung einer Temperatur (31), einer zweiten Einrichtung zur Bestimmung einer Temperatur (32) und einer dritten Einrichtung zur Bestimmung einer Temperatur (33) auf der Leiterplatte (3),
Bereitstellen eines Messkörpers (2) mit zumindest einer ersten Seite (21) und zumindest einer zweiten Seite (22),
Aufbringen der Leiterplatte (3) auf den Messkörper (2), so dass die erste, zweite und dritte Einrichtung zur Bestimmung einer Temperatur (31, 32, 33) jeweils in einem vorgebbaren Abstand (X1, X2, X3) zur ersten Seite (21) des Messkörpers (2) angeordnet sind, wobei der vorgebbare Abstand X2 der zweiten Einrichtung (32) zur Bestimmung der Temperatur so gewählt ist, dass dieser zwischen dem ersten Abstand X1 und dem dritten Abstand X3 der ersten und dritten Einrichtungen (31, 33) zur Bestimmung der Temperatur liegt,

bereitstellen einer Auswerteeinrichtung, welche dazu eingerichtet ist, aus den drei Temperaturen bzw. den Temperaturdifferenzen eine Grenzschichtdicke und/oder einen konvektiven Wärmeübergangskoeffizienten zu bestimmen.

**11.** Verfahren nach Anspruch 10, **dadurch gekennzeichnet, dass** die erste, zweite und dritte Einrichtung zur Bestimmung einer Temperatur (31, 32, 33) jeweils ein Thermoelement enthält oder daraus besteht, wobei deren Erzeugung durch Abscheiden und Strukturieren von einem ersten Metall (41) und einem zweiten Metall (42) auf der Leiterplatte (3) erfolgt.

**12.** Verfahren nach Anspruch 11, **dadurch gekennzeichnet, dass** das erste Metall und das zweite Metall ausgewählt sind aus Cu und/oder CuNiMn und/oder NiCr und/oder CuNi und/oder Fe und/oder CuNi und/oder Ni und/oder CrNi.

**13.** Verfahren nach einem der Ansprüche 11 oder 12, **dadurch gekennzeichnet, dass** das erste Metall (41) und/oder das zweite Metall (42) durch Sputtern oder thermisches Verdampfen oder außenstromlos oder galvanisch aufgebracht wird.

**14.** Verfahren nach einem der Ansprüche 11 bis 13, **dadurch gekennzeichnet, dass** der Messkörper (2) in einem generativen Herstellungsverfahren erzeugt wird und/oder dass der Messkörper (2) ein Polymer enthält oder daraus besteht.

**Claims**

**1.** Boundary layer sensor (1) for determining a thickness of a boundary layer on a surface (65) of a body (6) around which there is a flow, said sensor having

at least a first device for determining a temperature (31), at least a second device for determining a temperature (32) and at least a third device for determining a temperature (33), each being designed to be arranged at a predefinable distance (X1, X2, X3) from the surface (65) of the body (6) around which there is a flow during the operation of the boundary layer sensor (1), the predefinable distance X2 of the second device (32) for determining the temperature being selected in such a way that this distance is between the first distance X1 and the third distance X3 of the first and third device (31, 33) for determining the temperature, the boundary layer sensor (1) further comprising an evaluation device which is designed to determine the boundary layer thickness and/or the convective heat transfer coefficient from the three temperatures or the temperature differences, **characterized in that** at least the second and the third device for determining a temperature (32, 33) are applied to a printed circuit board (3), which is applied to a measuring element (2).

2. Boundary layer sensor according to claim 1, **characterized in that** at least one device for determining a temperature (31, 32, 33) comprises or consists of a thermocouple.

3. Boundary layer sensor according to claim 1 or 2, **characterized in that** the thermocouple is selected from Cu-CuNiMn and/or Cu-CuNi and/or NiCr-CuNi and/or Fe-CuNi and/or Ni-CrNi.

4. Boundary layer sensor according to any one of claims 1 to 3, **characterized in that** the printed circuit board (3) comprises polyimide or consists thereof.

5. Boundary layer sensor according to any one of claims 1 to 4, **characterized in that** the measuring element (2) has at least a first side (21) which can be connected to the surface (65) of the body (6) around which there is a flow, and has at least a second side (22) which rises continuously from the surface (65).

6. Boundary layer sensor according to claim 5, **characterized in that** the printed circuit board (3) at least partially covers the first and the second side.

7. Boundary layer sensor according to any one of claims 1 to 6, **characterized in that** the second side (22) of the measuring element (2) is flat or convex in shape.

8. Boundary layer sensor according to any one of claims 1 to 7, **characterized in that** the measuring element (2) has the shape of a wedge or a spherical dome.

9. Wind energy system or vehicle or aircraft or indoor climate measuring device or ship having an boundary layer sensor according to any one of claims 1 to 8.

10. Method for producing an boundary layer sensor (1), comprising the steps of:

    providing a printed circuit board (3),

    producing at least a first device for determining a temperature (31), a second device for determining a temperature (32) and a third device for determining a temperature (33) on the printed circuit board (3),

    providing a measuring element (2) having at least a first side (21) and at least a second side (22),

    applying the printed circuit board (3) to the measuring element (2) so that the first, second and third devices for determining a temperature (31, 32, 33) are each arranged at a predefinable distance (X1, X2, X3) from the first side (21) of the measuring element (2), wherein the predefinable distance X2 of the second device (32) for determining the temperature is selected in such a way that this distance is between the first distance X1 and the third distance X3 of the first and third devices (31, 33) for determining the temperature,

    providing an evaluation device which is designed to determine an boundary layer thickness and/or a convective heat transfer coefficient from the three temperatures or the temperature differences.

11. Method according to claim 10, **characterized in that** the first, second and third device for determining a temperature (31, 32, 33) each comprises or consists of a thermocouple, the generation thereof being carried out by depositing and structuring a first metal (41) and a second metal (42) on the printed circuit board (3).

12. Method according to claim 11, **characterized in that** the first metal and the second metal are selected from Cu and/or CuNiMn and/or NiCr and/or CuNi and/or Fe and/or CuNi and/or Ni and/or CrNi.

13. Method according to any one of claims 11 or 12, **characterized in that** the first metal (41) and/or the second metal (42) is applied by sputtering or thermal evaporation or electroless plating or by electroplating.

14. Method according to any one of claims 11 to 13, **characterized in that** the measuring element (2) is produced in a generative production process and/or **in that** the measuring element (2) comprises a polymer or consists thereof.

**Revendications**

1. Capteur de couche limite (1) destiné à déterminer l'épaisseur d'une couche limite au-dessus d'une surface (65) d'un corps (6) entouré d'un flux, comprenant

au moins un premier dispositif de détermination d'une température (31), au moins un deuxième dispositif de détermination d'une température (32) et au moins un troisième dispositif de détermination d'une température (33), qui sont chacun conçus pour être placés, pendant le fonctionnement du capteur de couche limite (1), à une distance prédéfinissable (X1, X2, X3) par rapport à la surface (65) du corps (6) entouré d'un flux, la distance prédéfinissable X2 du deuxième dispositif (32) de détermination de la température étant choisie de manière à se situer entre la première distance X1 et la troisième distance X3 des premier et troisième dispositifs (31, 33) de détermination de la température, le capteur de couche limite (1) comprenant en outre un dispositif d'évaluation conçu pour déterminer, à partir des trois températures ou des différences de température, l'épaisseur de la couche limite et/ou le coefficient de transfert de chaleur par convection,
**caractérisé en ce que**
au moins les deuxième et troisième dispositifs de détermination d'une température (32, 33) sont appliqués sur une carte de circuit imprimé (3) qui est appliquée sur un corps de mesure (2).

2. Capteur de couche limite selon la revendication 1, **caractérisé en ce qu'**au moins un dispositif de détermination d'une température (31, 32, 33) comprend un thermocouple ou en est constitué.

3. Capteur de couche limite selon la revendication 1 ou 2,
**caractérisé en ce que** le thermocouple est choisi parmi Cu-CuNiMn et/ou Cu-CuNi et/ou NiCr-CuNi et/ou Fe-CuNi et/ou Ni-CrNi.

4. Capteur de couche limite selon l'une des revendications 1 à 3,
**caractérisé en ce que** la carte de circuit imprimé (3) comprend du polyimide ou en est constituée.

5. Capteur de couche limite selon l'une des revendications 1 à 4,
**caractérisé en ce que** le corps de mesure (2) présente au moins une première face (21), susceptible d'être reliée à la surface (65) du corps (6) entouré d'un flux, et au moins une deuxième face (22) qui s'élève de manière continue à partir de la surface (65).

6. Capteur de couche limite selon la revendication 5, **caractérisé en ce que** la carte de circuit imprimé (3) recouvre au moins partiellement les première et deuxième faces.

7. Capteur de couche limite selon l'une des revendications 1 à 6,
**caractérisé en ce que** la deuxième face (22) du corps de mesure (2) est de forme plane ou convexe.

8. Capteur de couche limite selon l'une des revendications 1 à 7,
**caractérisé en ce que** le corps de mesure (2) présente la forme d'une cale ou d'une calotte sphérique.

9. Eolienne ou véhicule ou avion ou appareil de mesure du climat ambiant ou navire, comportant un capteur de couche limite selon l'une des revendications 1 à 8.

10. Procédé de fabrication d'un capteur de couche limite (1),
comprenant les étapes suivantes consistant à :

fournir une carte de circuit imprimé (3),
réaliser au moins un premier dispositif de détermination d'une température (31), un deuxième dispositif de détermination d'une température (32) et un troisième dispositif de détermination d'une température (33) sur la carte de circuit imprimé (3),
fournir un corps de mesure (2) présentant au moins une première face (21) et au moins une deuxième face (22),
appliquer la carte de circuit imprimé (3) sur le corps de mesure (2), de sorte que les premier, deuxième et troisième dispositifs de détermination d'une température (31, 32, 33) sont disposés chacun à une distance prédéfinissable (X1, X2, X3) par rapport à la première face (21) du corps de mesure (2), la distance prédéfinissable X2 du deuxième dispositif (2) de détermination de la température étant choisie de manière à se situer entre la première distance X1 et la troisième distance X3 des premier et troisième dispositifs (31, 33) de détermination de la température,
fournir un dispositif d'évaluation conçu pour déterminer l'épaisseur d'une couche limite et/ou un coefficient de transfert de chaleur par convection à partir des trois températures ou des différences de température.

11. Procédé selon la revendication 10,
**caractérisé en ce que** les premier, deuxième et troisième dispositifs de détermination d'une température (31, 32, 33) comprennent ou sont constitués chacun d'un thermocouple, leur réalisation se faisant par dépôt et structuration d'un premier métal (41) et d'un deuxième métal (42) sur la carte de circuit imprimé (3).

12. Procédé selon la revendication 11,
**caractérisé en ce que** le premier métal et le deuxième métal sont choisis parmi Cu et/ou CuNiMn et/ou NiCr et/ou CuNi et/ou Fe et/ou CuNi et/ou Ni et/ou CrNi.

13. Procédé selon l'une des revendications 11 ou 12, **caractérisé en ce que** le premier métal (41) et/ou le deuxième métal (42) est déposé par pulvérisation cathodique ou par évaporation thermique ou sans courant extérieur ou par électrolyse.

14. Procédé selon l'une des revendications 11 à 13,

**caractérisé en ce que** le corps de mesure (2) est réalisé par un procédé de fabrication additive, et/ou
**en ce que** le corps de mesure (2) comprend un polymère ou en est constitué.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- DE 102016107212 A1

**In der Beschreibung aufgeführte Nicht-Patentliteratur**

- **E. MAYER et al.** *Bauphysik,* 2018, vol. 40, ISSN 0171-5445, 336-343